# EUROPEAN PATENT APPLICATION

(11) **EP 1 624 555 A2**
(43) Date of publication of application: **08.02.2006**
(21) Application number: 05254756.9
(22) Date of filing: 29.07.2005
(51) Int. Cl.: H02K 21/24, H02K 1/14

(54) **Axial-gap dynamo-electric machine**

(30) Priority: 03.08.2004 JP 2004227065
(71) Applicant: NISSAN MOTOR CO., LTD., Yokohama-shi, Kanagawa 221-0023 (JP)
(72) Inventor: Minagawa, Yuusuke, Yokohama-shi, Kanagawa 221-0023 (JP); Ozaki, Noriyuki, Yokohama-shi, Kanagawa 221-0023 (JP)
(74) Representative: Holmes, Matthew William

(57) **Abstract**

A stator for use in an axial-gap dynamo-electric machine. The stator core may be fabricated from a plurality of stator core elements each of which may be arranged to form teeth portions on a rotor side of the stator core elements and which also form back portions on a base side of the stator core elements. The stator core elements may contact one another such that magnetic, and other losses, are reduced and overall machine efficiency is improved over conventional designs.

## Description

The present invention relates to an axial gap dynamo electric machine and to a stator for use with such a machine.

Applications of interior permanent magnet synchronous motors (IPMSMs) in which permanent magnets are embedded in the rotors, and surface permanent magnet synchronous motors (SPMSMs) in which permanent magnets are glued to the rotor surfaces, are expanding to include electric vehicles and hybrid vehicles. These motor types offer distinct advantages because they are highly efficient and generate large output torques (their magnet torque and reluctance torque can be utilized).

Axial-gap motors, which are a type of permanent magnet synchronous motor having a stator and a rotor disposed facing each other in the axial direction, can be packaged in tight locations and thus they lend themselves to applications with layout constraints. An axial-gap motor is known as a type of dynamo-electric machine, for example, in which a single stator and two rotors maintain an air gap in the axial direction. An example of such a device can be found in Japanese patent application No. 2003-088032. A motorized two-wheeled vehicle having an axial-gap electric motor as its power source is also known, for example from Japanese patent application No. 2003-191883.

It is an aim of the present invention to address disadvantages of known devices.

According to one aspect of the invention, therefore, there is provided an axial-gap dynamo-electric machine including a rotor and a stator, the rotor and the stator being disposed along a common axis and the rotor being rotatably supported so as to provide an air gap between the rotor and the stator, the stator comprising a plurality of stator core elements disposed adjacent one another, each stator core element including a tooth portion disposed on a rotor side of the stator core element and a back portion disposed on a base side of the stator core element, wherein the tooth portion is integrally formed with the back portion.

The stator core elements may be disposed adjacent to one another such that the back portions of adjacent stator core elements contact one another. The back portions of the stator core elements may be secured to a dynamo-electric machine case.

According to another aspect of the invention there is provided an axial-gap dynamo-electric machine including a rotor and a stator, the rotor and the stator being disposed along a common axis and the rotor being rotatably supported for rotation about an axis of rotation so as to provide an air gap between the rotor and the stator, the stator comprising a plurality of stator core elements disposed adjacent one another and being formed from a plurality of plates laminated together, wherein each stator core element is disposed such that the plates thereof are oriented generally parallel to the axis of rotation and/or generally perpendicularly to a line extending radially from the axis of rotation.

The plates may be formed from a ferrous or ferromagnetic material. In one embodiment, each stator core element comprises a tooth portion and a back portion. The tooth portion may be integrally formed with the back portion or may be separately formed therefrom and adhered or otherwise secured thereto.

In one embodiment, the stator includes carrier means, such as a plate or yoke, for carrying the stator core elements. The carrier may be formed from a plurality of generally annular layers concentric with the axis of rotation. The carrier means may be formed from a ferrous or ferromagnetic material which may be the same as that from which the stator core elements are formed.

According to yet another aspect of the invention there is provided an axial-gap dynamo-electric machine including a rotor on which permanent magnets are disposed and a stator having a stator core, wherein said rotor and said stator core are disposed along a common axis, wherein said rotor is rotatably supported providing an air gap between the rotor and the stator, wherein the stator core, comprises a plurality of stator core elements, wherein each stator core element includes a tooth portion disposed on a rotor side of the stator core element and a back portion disposed on a base side of the stator core element, wherein the tooth portion is integrally formed with the back portion, wherein the stator core elements are disposed adjacent to one another such that the back portions of adjacent stator core elements contact one another, and wherein the back portions of the stator core elements are secured to a dynamo-electric machine case.

The back portion of each stator core element may include a pair of ½ back portions, wherein the tooth portion and the pair of ½ back portions integrally form a generally T-shaped cross-section. Each ½ back portion in the pair of ½ back portions may include a peripheral-direction end face, and adjacently disposed stator core elements may contact one another along their peripheral-direction end faces.

The tooth portion of each stator core element may include a pair of ½ teeth portions, wherein the back portion and the pair of ½ teeth portions integrally form a generally U-shaped cross-section. Each ½ tooth portion in the pair of ½ teeth portions may include a peripheral-direction end face, and adjacently disposed stator core elements may contact one another along their peripheral direction end faces.

The machine may further comprise a position plate for mounting to the plurality of stator core elements. Radial-direction, convex structures may be disposed on the back portion of each stator core element and the position plate may include radial-direction, concave structures that engage the radial-direction, convex structures on the back portion of each stator core element. The position plate may be secured to the dynamo-electric machine case.

The machine may further include a donut-shaped or annular stator-securing cover having through-holes formed therein. The through-holes may be arranged to register with corresponding teeth portions of the stator core elements of the stator core. The stator securing cover may be arranged to snappingly engage the rotor side of the stator core elements.

Each stator core element may be formed from a plurality of steel plates laminated together such that the steel plates are generally perpendicular to a radial line originating from an axis of rotation of the axial-gap dynamo-electric machine.

The stator may further include a position plate for mounting to the plurality of stator core elements and, optionally, means for fastening each stator core element to said position plate.

According to a further aspect of the invention there is provided a stator for use in an axial-gap dynamo-electric machine, comprising a plurality of stator core elements, wherein each stator core element includes a tooth portion and a back portion, and wherein the stator core elements are disposed adjacent to one another such that the back portions of adjacent stator core elements contact one another.

In one embodiment, the tooth portion is integral with the back portion to form a generally T-shaped cross-section. Each back portion may include a first and a second peripheral-direction end face wherein adjacently disposed stator core elements contact one another along their peripheral-direction end faces.

In one embodiment, the tooth portion of each stator core element includes a pair of teeth and the back portion is integral with the pair of teeth to form a generally U-shaped cross-section. Each tooth in each pair of teeth may include a peripheral-direction end face wherein adjacently disposed stator core elements contact one another along their peripheral direction end faces.

The stator may further include a position plate for mounting to the plurality of stator core elements. Each stator core element may include at least one of a depression or a projection that engages a mating structure formed in the position plate. The at least one depression or projection of each stator core element may be elongated along a radial-direction defined by a radial line extending from an axis of rotation associated with the stator.

In one embodiment, each stator core element is formed from a plurality of steel plate laminations. The plurality of stator core elements may be fastened to the position plate such that the steel plate laminations of each sector core element are generally perpendicular to a radial line extending from an axis of rotation associated with the stator. The at least one depression or projection in each stator core element may be arranged to snappingly engage the mating structure formed in the position plate.

The stator may additionally include a stator-securing element having engagement openings adapted to mate with the tooth portions of each stator core element. The engagement openings of the stator-securing element may be sized relative to the tooth portions of each stator core element such that the engagement openings snappingly mate with the tooth portions.

In one embodiment, the stator includes a position plate for mounting to the plurality of stator core elements and, optionally, means for fastening each stator core element to said position plate.

According to a still further aspect of the invention there is provided a stator for use with an axial gap, dynamo-electric machine having a rotor and a stator, the stator comprising a plurality of stator core elements disposed adjacent one another, each stator core element including a tooth portion disposed on a first side thereof and a back portion disposed on a base side thereof, wherein the tooth portion is integrally formed with the back portion.

According to a still further aspect of the invention there is further provided a stator for use with an axial gap, dynamo-electric machine having a stator and a rotor rotatably supported for rotation about an axis of rotation, the stator comprising a plurality of stator core elements disposed adjacent one another and being formed from a plurality of plates laminated together, wherein each stator core element is disposed such that the plates thereof are oriented generally parallel to the axis of rotation and/or generally perpendicular to a line extending radially from the axis of rotation.

According to a still further aspect of the invention, there is provided a stator for use with an axial gap, dynamo-electric machine having a stator and a rotor rotatably supported for rotation about an axis of rotation, the stator comprising a body formed from a plurality of generally annular layers concentric with the axis of rotation, the body having a plurality of stator core elements disposed on a first side thereof and formed integrally therewith such that the layers of each stator core element are oriented generally parallel to the axis of rotation and/or generally perpendicular to a line extending radially from the axis of rotation.

The various aspects, embodiments and/or alternatives described above may be used either alone or in suitable combination.

The present invention will now be described, by way of example only, with reference to the accompanying drawings in which:
FIG. 1 is a cross-sectional view of an axial-gap dynamo-electric machine embodying the invention;
FIG. 2 is a an isometric view of an embodiment of the stator core portion of the axial-gap dynamo-electric machine of FIG. 1;
FIG. 3 is an isometric view of a single stator core element from the stator core of FIG. 2;
FIG. 4 is an isometric view of a prior art stator core;
FIG. 5 is an isometric view of another embodiment of the stator core portion of the axial-gap dynamo-electric machine of FIG. 1;
FIG. 6 is an isometric view of a single stator core element from the stator core of FIG. 5; and
FIG. 7 is an exploded, isometric view of a further embodiment of a stator for use in an axial-gap dynamo-electric machine.

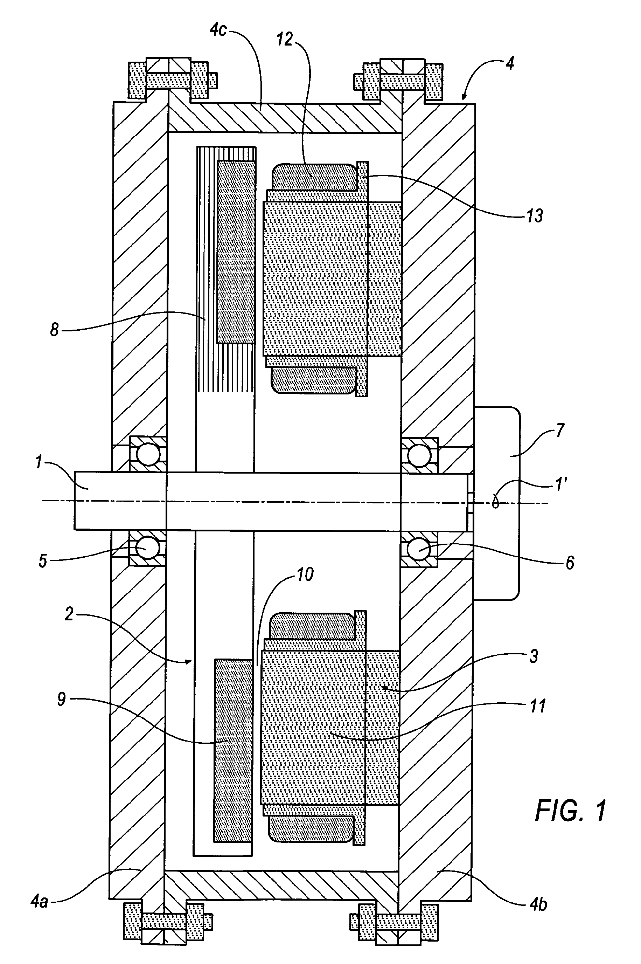

FIG. 1 is a cross-sectional diagram illustrating an axial-gap dynamo-electric machine embodying the invention. The axial-gap dynamo-electric machine is provided with a rotation axle 1, a rotor 2, a stator 3, and a dynamo-electric machine case 4. The illustrated dynamo-electric machine case 4 includes a front side case 4a, a rear side case 4b, and a peripheral case 4c bolted, or otherwise secured, to both side cases 4a and 4b.

In the illustrated embodiment, rotation axle 1 is rotatably supported by both a first bearing 5 provided on the front side case 4a and a second bearing 6 provided on the rear side case 4b. Further, the rearward portion of rotation axle 1 may be joined to a rotation sensor 7 for sensing the rotation of axle 1.

Rotor 2 is secured to the rotation axle 1 and includes a rotor core 8 which may be made from laminated sheets of flat-rolled magnetic steel (or other ferromagnetic body) secured to rotation axle 1. Reactive forces are generated in multiple permanent magnets 9 embedded in a surface of rotor 2 facing stator 3. These reactive forces are generated in reaction to the rotating magnetic flux provided by stator 3 and cause rotor 2 to rotate about rotation axis 1' of axle 1. In the illustrated embodiment, the multiple permanent magnets 9 are disposed such that adjacent surface magnetic polarities (North and South poles) of the permanent magnets 9 alternate. Rotor 2 is spaced from stator 3 such that an air gap 10 is present and as a result, rotor 2 and stator 3 do not contact one another.

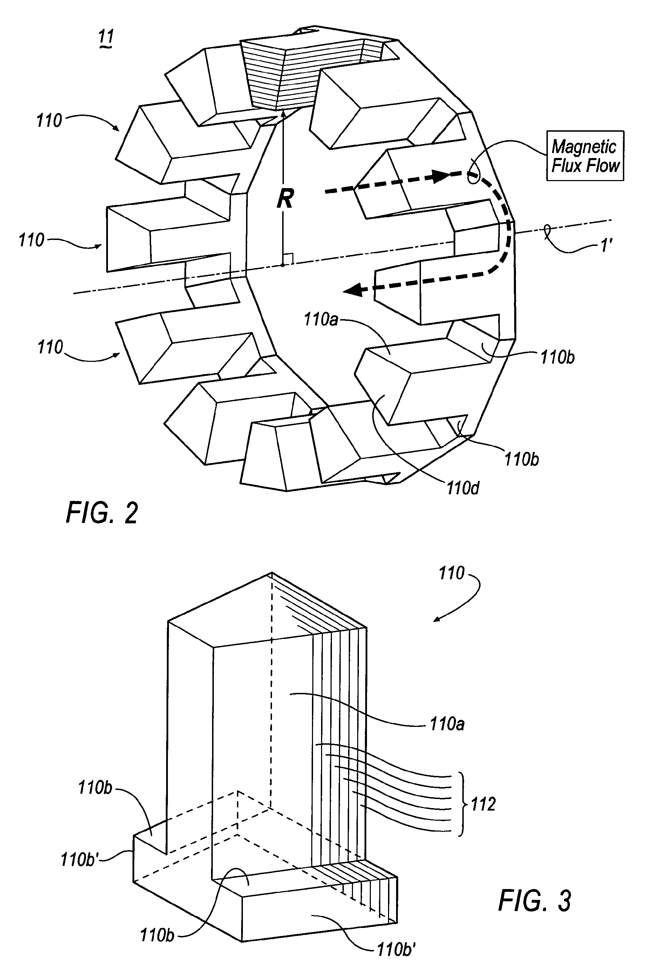

Stator 3 may be secured (e.g., fastened) to rear side case 4b and includes stator core 11 and a plurality of stator coils (exemplified at 12). Stator core 11 is fabricated from a plurality of stator core elements 110 (e.g., see FIG. 3). In one embodiment, each stator coil 12 encircles (for example by winding) a respectively associated stator core element 110 and is kept insulated therefrom by way of an insulating member 13. Insulating member 13 forms an insulating body and may be formed from insulating paper or other suitable material. Each stator coil 12 may be respectively associated with a stator core element 110.

FIG. 2 is a perspective view illustrating an embodiment of the stator core 11 of FIG. 1. Stator core 11 includes multiple individual stator core elements 110. Twelve stator core elements 110 are shown in FIG. 2, but stator core 11 may be fabricated from any number of individual stator core elements 110. As shown in FIGS. 2 and 3, each stator core element 110 includes a tooth portion 110a on a rotor side of stator 3 and a back portion 110b, which may include a back portion defined by fractional sub-portions (e.g., a pair of ½ back portions 110b and 110b on a base side of stator 3). In the illustrated embodiment, tooth portion 110a is integrally formed with its corresponding back portion 110b and may be formed from a single sheet of rolled magnetic steel. Adjacent stator core elements 110 and 110 contact each other and the back portions 110b of each stator core element 110 are secured (for example by fastening) to the dynamo-electric machine case 4 (e.g., the rear side case 4b).

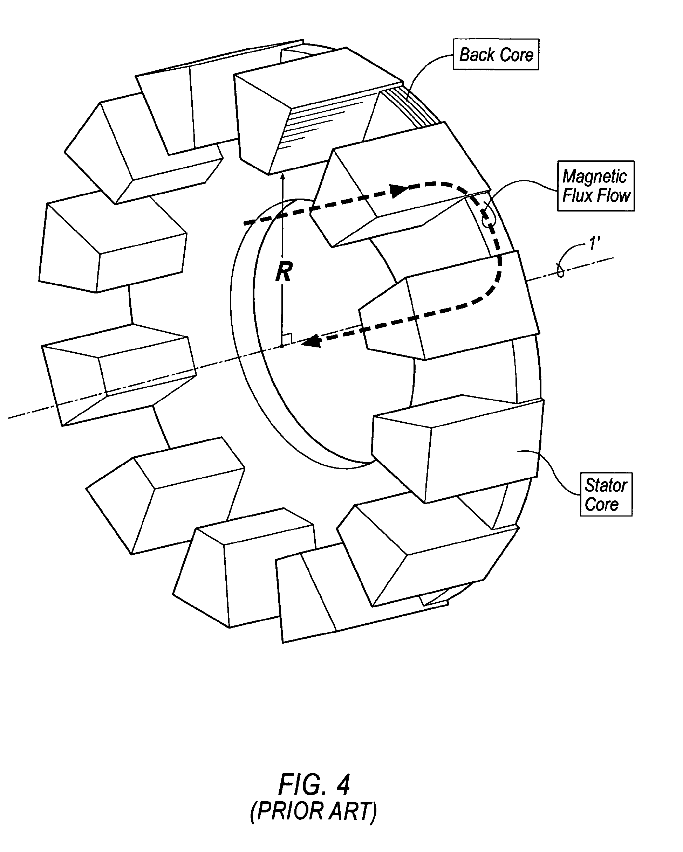

As shown in the exemplary embodiments of FIGS. 2 and 3, each stator core element 110 is configured having a T-shape cross-section that integrates the tooth portion 110a with the pair of ½ back portions 110b and 110b. Adjacent stator core elements 110 and 110 are disposed such that peripheral-direction end faces 110b' and 110b' of adjacent ½ back portions 110b and 110b abut one another. Additionally, each stator core element 110 is fabricated from one or more flat rolled magnetic steel plates (sheets) 112 composed of material suitable for use in dynamo-electric applications. Multiple plates are laminated together (exemplified at 112) and are oriented such that they lie in a plane which is generally perpendicular to a radial line R which originates at the rotation axis 1' (see FIG. 2). By constructing each stator core element such that its tooth portion 110a is integral with its back portion (e.g., formed from, or joined into, a single sheet) to form an integral T-shape, the junction that would traditionally be present between tooth portion 110 and back portion is eliminated. This design reduces the magnetic flux loss (compared to the prior art) by reducing the number of junctions between adjacent steel plates. Additionally, by eliminating the conventional back core (see FIG. 4), the number of components are reduced which leads to reduced costs. Additional benefits are gained because the design of stator core element 110 offers improved efficiency over the prior art because the steel plates may be oriented perpendicular to the radial direction R as viewed from the rotor side. This parallel orientation of steel plates 112 minimizes loop currents and consequently minimizes the efficiency losses that arise when magnetic flux crosses boundaries between plates that are not all uniformly oriented.

FIG. 4 depicts a conventional prior art stator wherein the back core (or back yoke) is used as a conducting member in the magnetic flux path. The magnetic flux crosses the junction formed between the back core and the two adjacent stator cores. It is common for the stator core and the back core to be fabricated using laminated structures. When laminated structures are used, stator core laminations and back core laminations are oriented such that they cross each other (i.e. back core laminations are layered in planes that are perpendicular to the rotation axis 1' while the stator core laminations are layered in planes that are parallel to the rotation axis 1'). In this prior art design configuration, excessive loop currents are induced and voltage drops are generated as the magnetic flux flows between adjacent stator cores by way of the stator back core. This in turn gives rise to electrical losses which lower machine efficiency.

In contrast to the prior art design shown in FIG. 4, the axial-gap dynamo-electric machine as described in FIGS. 1-3 offers improved efficiency. Specifically, by using a plurality of stator core elements to build stator core 11, wherein each stator core element includes a tooth portion 110a on the rotor side and a back core which may include a pair of ½ back cores 110b and 110b on the base side, and by having adjacent stator core elements 110 and 110 contact each other with the back portions 110b and 110b of each stator core element 110 secured to the rear side case 4b of the dynamo-electric machine case 4, superior functionality may be obtained over the prior art design of FIG. 4 which uses a laminated back core which is not integrated with a laminated stator core wherein the orientation of the laminates in the back core cross the orientation of the laminates in the stator core.

Because of the nature of the contact between the peripheral-direction end faces 110b' and 110b' of the ½ back portions 110b and 110b of adjacent stator core elements 110 and 110, an improved efficiency may be gained because the magnetic flux traverses the contact area between adjacent ½ back cores 110b and 110b as shown in FIG. 2, resulting in a larger magnetic flux path on the base side of the stator core than can typically be obtained using the prior art design of FIG. 4.

Furthermore, by eliminating the back core design of the prior art, the magnetic flux path of the prior art design (as measured from stator core to the back core and to an adjacent stator core) is shortened to form a magnetic path that traverses one stator core element 110 to another stator core element 110. Thus, among other things, the present invention reduces the number of junctions (from that of the conventional example) which in turn reduces magnetic flux loss (the embodiment of FIG. 2 only requires the magnetic flux to traverse one junction between adjacent stator core elements 110 while the prior art requires the magnetic flux to traverse two junctions between adjacent stator cores -- compare FIG. 2 with FIG. 4).

By aligning the orientation of the laminations of the stator core elements 110 such as shown in FIG. 2, the orientation of the laminations stays coincident relative to the flow of magnetic flux through stator core 11 and stator core elements 110. This coincidence between magnetic flux flow and lamination orientation reduces the number of boundaries that the magnetic flux must cross when traversing adjacent stator core elements thereby reducing loop current generation (which occurs in the prior art example) and minimizing magnetic flux loss.

As explained above, the combined effect gained by expanding the magnetic flux path and by reducing the magnetic flux loss, both act to increase the magnetic flux density (i.e. the number of lines of magnetic flux oriented in the same direction per unit volume) of the electromagnet formed by stator core 11 and stator coils 12. This multiplied effect results in improved machine efficiency.

By constructing each stator core element 110 as an integrated T-shape element, magnetic flux loss is reduced by reducing the number of junctions compared to the conventional example. In addition, eliminating the conventional back core, reduces the number of components leading to cost reduction. Also, because stator core elements may be fabricated from steel plates which are laminated together and oriented parallel to rotation axis 1', magnetic flux loss (resulting from components which do not have aligned laminated sheets) and the consequent generation of undesirable loop currents, are both eliminated.

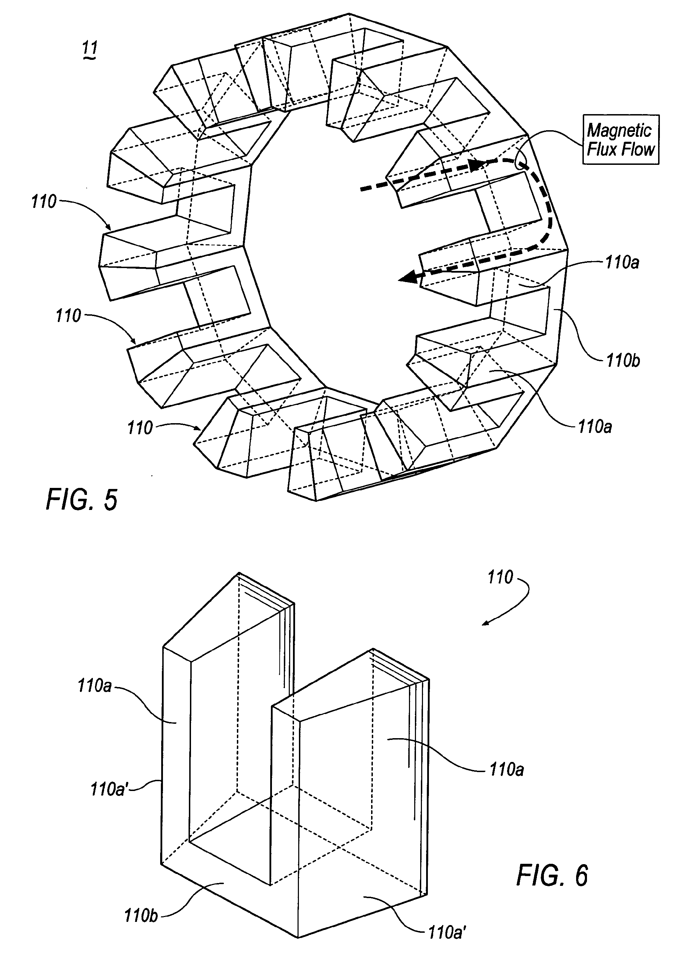

FIG. 5 is an embodiment in which the location of the interface between adjacent stator core elements 110 may be defined by adjacent teeth members 110a and 110a. As shown in FIGS. 5 and 6, stator core 11 may be comprised of a plurality of stator core elements 110. A single stator core element 110 is exemplified in FIG. 6 and generally has a U-shaped cross-section. Each stator core element 110 may include a pair of fractional teeth portions (e.g., ½ teeth portions 110a and 110a which may be integrated with back portion 110b). Each ½ tooth portion 110a in each U-shaped stator core element 110 includes a peripheral-direction end face 110a'. Adjacent U-shaped stator core elements 110 and 110 are disposed such that the peripheral-direction end faces 110a' and 110a' of adjacent ½ tooth portions 110a and 110a may contact one another. The remainder of the configuration may be substantially identical to the embodiment shown and discussed in conjunction with FIGS. 2 and 3.

In the embodiment of FIG. 5 and FIG. 6, all portions of peripheral-direction end face 110a' may be generally parallel to the flow of magnetic flux, and accordingly, magnetic flux lines do not cross one another. By eliminating the crossing of magnetic flux lines, flux loss is minimized. Note that because other aspects of this embodiment are generally substantially identical to that shown in FIGS. 2 and 3, further explanation is omitted.

Because stator core element 110 can be configured in a U-shape which includes a pair of ½ teeth members 110a and 110a integrated with a back portion 110b, and also because adjacent U-shaped stator core elements 110 are disposed such that the peripheral-direction end faces 110a' and 110a' of the ½ teeth cores 110a and 110a of adjacent stator core elements 110 and 110 may contact each other, the lines of magnetic flux do not cross one another and thus, a loss of magnetic flux is minimized. Additionally, eliminating the conventional back core design reduces the number of components leading to cost reduction.

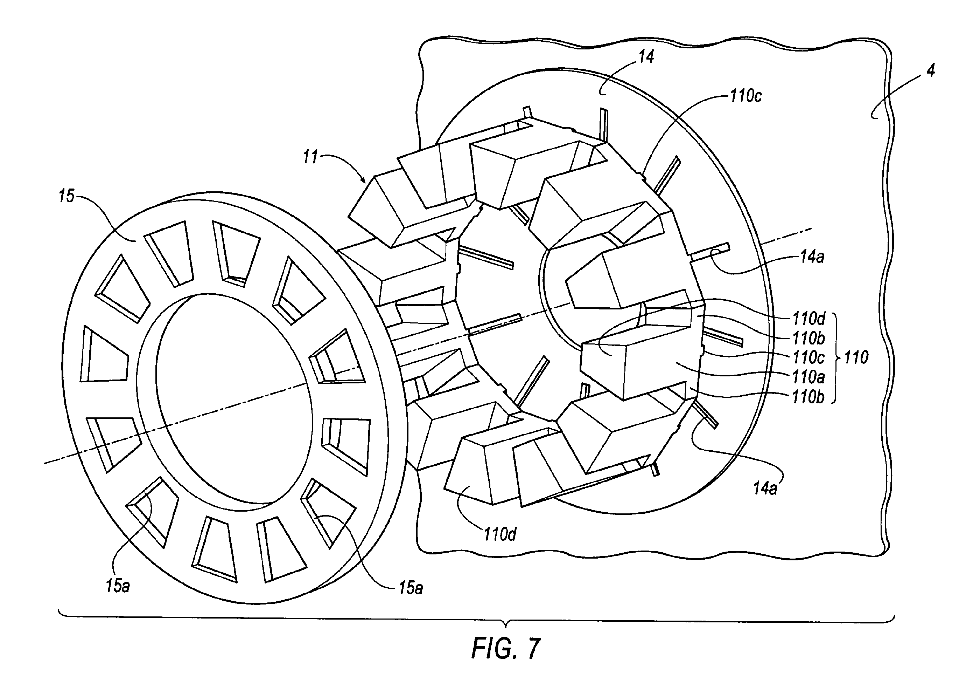

FIG. 7 discloses yet another embodiment that may increase both the contact reliability between adjacent stator core elements and also increase the axial-direction secureness of stator core elements. In FIG. 7, radial-direction positioning projections 110c (which may be convex structures) may be formed on a surface of each stator core element 110 which is to be secured, such as to a portion of case 4. A positioning plate 14 may be included and further may include radial-direction positioning grooves 14a (which may be concave structures) that cooperatively engage (i.e. mate) with positioning projections 110c. Plate 14 may be fastened to a surface of stator core 11 which is made up of a plurality of stator core elements 110. Plate 14 may be secured to dynamo-electric machine case 4.

A donut-shaped stator-securing cover 15 may be provided in which a plurality of through-holes 15a may be formed in locations corresponding with teeth portions 110a of stator core elements 110. Through-holes 15a are formed in the stator-securing cover 15 such that securing-cover 15 is easily manipulated along axis 1' from the rotor side of stator core 11 into registration with, and to engage, the plurality of tooth portions 110a of stator core 11. Because the remainder of the configuration shown in FIG. 7 is generally/substantially identical to the embodiments previously discussed, like reference numbers are used for like components.

In the embodiment of FIG. 7, secure contact is achieved between stator core elements 110 by engaging radial-direction positioning projections 110c formed on a surface of stator core elements 110 with radial-direction positioning grooves 14a formed in positioning plate 14 and thereafter urging each stator core element 110 radially inwardly. The relative dimensions between positioning projections 110c and positioning grooves 14a may be sized such that the stator core elements 110 are snapped into engagement with positioning plate 14. Thereafter, stator-securing cover 15 is manipulated along axis 1' from the rotor side of stator core 11 and stator core 11 is secured in the axial direction by manipulating teeth portions 110a into their respectively associated through-holes 15a of the stator-securing cover 15. The relative dimensions between through-holes 15a of stator-securing cover 15 and teeth portions 110a may be sized such that stator-securing cover 15 is snapped into engagement with teeth portions 110a.

Because of the relatively broad base of contact between the back portion of stator core element 110 and plate 14, and also because of the positive engagement between positioning projections 110c and positioning grooves 14a, stator core 11 is prevented from moving relative to position plate 14. Moreover, the engagement between positioning projections 110c and positioning grooves 14a ensures positive alignment between peripheral-direction end faces 110b' of adjacent stator core elements 110. Furthermore, installing stator securing cover 15 over teeth portions 110a defines the radial position of each stator core element 110 and the axial-direction secureness of each stator core element 110 is established. Also, the planar accuracy of the rotor-facing surface 110d of each stator core element 110 is achieved in the axial-direction. As a result, it is easier to control the size of air gap 10 between the stator-facing surface of permanent magnet 9 of the rotor and the rotor-facing surface 110d of the stator core elements 110. Additionally, the use of stator-securing cover 15 allows the air gap 10 size to be adjusted to achieve maximum machine efficiency.

The embodiments described herein set forth exemplary applications in which a single rotor and a single stator are used. However, any number of rotor-stator combinations may be used, including a single rotor and two stators, two rotors and a single stator, two rotors and three stators, three rotors and two stators, or the like. Additionally, FIG. 7 illustrates an embodiment in which positioning plate 14 and stator-securing cover 15 are combined with a stator core embodiment such as disclosed in FIG. 2 and FIG. 3; however, it is contemplated herein that the stator core design as disclosed in FIG. 5 and FIG. 6 can also be used in combination with positioning plate 14 and stator-securing cover 15 of FIG. 7. Also, in FIG. 7, radial-direction positioning projections (convex structures 110c) are associated with stator core elements 110 and radial-direction positioning grooves (e.g., concave structures) 14a are associated with positioning plate 14. However, one skilled in the art will readily recognize that radial-direction positioning grooves (e.g., concave structures) 14a, may be easily associated with stator core elements 110 and likewise radial-direction positioning projections (convex structures) 110c may be associated with positioning plate 14 while still accomplishing the same functionality described herein. Also, although convex and concave structures 110c and 14a are shown radially continuously, one skilled in the art will recognize that non-continuous structures may function equally as well. The disclosure herein relating to axial-gap dynamo-electric machines relates to motors and generators alike.

Although the back portion of the stator core elements 110 can be defined by symmetrical fractional sub-portions, (e.g., a pair of ½ back portions, 110b and 110b), one skilled in the art will recognize that the back portion can be defined by non-symmetrical fractional sub-portions (e.g., 1/3 and 2/3 portions) and also that back portion can be defined such that no fractional sub-portions exist (e.g., 100% and 0%). Additionally, although the fractional tooth portions 110a and 110a have been illustrated herein as symmetrical ½ tooth portions, one skilled in the art will recognize that tooth portions 110a and 110a can be defined by non-symmetrical fractional sub-portions (e.g., 1/3 and 2/3) where appropriate.

In one embodiment, it is envisaged that the stator could be formed as a unitary or integral body, for example from a plurality of generally annular layers of ferromagnetic or other suitable material, concentric with the axis of rotation of the rotor. The tooth portion of each stator core element could be machined from the body so as to be disposed on the side of the body adjacent to the rotor.

The present invention has been shown and described with reference to the foregoing embodiments, which are merely illustrative examples of modes for carrying out the invention. It should be understood by those skilled in the art that various alternatives to the embodiments of the invention described herein may be employed in practicing the invention without departing from the scope of the invention as defined in the foregoing statements of invention and in the appended claims. It is intended that the claims appended hereto define the scope of the invention and that the method and apparatus within the scope of these claims and their equivalents be covered thereby. This description of the invention should be understood to include all novel and non-obvious combinations of elements described herein, and claims may be presented in this or a later application to any novel and non-obvious combination of these elements. Moreover, the foregoing embodiments are illustrative, and no single feature or element is essential to all possible combinations that may be claimed in this or a later application.

## Claims

1. An axial-gap dynamo-electric machine including a rotor on which permanent magnets are disposed and a stator having a stator core, wherein said rotor and said stator core are disposed along a common axis, wherein said rotor is rotatably supported providing an air gap between the rotor and the stator, wherein the stator core, comprises:
a plurality of stator core elements, wherein each stator core element includes a tooth portion disposed on a rotor side of the stator core element and a back portion disposed on a base side of the stator core element, wherein the tooth portion is integrally formed with the back portion, wherein the stator core elements are disposed adjacent to one another such that the back portions of adjacent stator core elements contact one another, and wherein the back portions of the stator core elements are secured to a dynamo-electric machine case.

2. An axial-gap dynamo-electric machine as claimed in claim 1, wherein the back portion of each stator core element includes a pair of ½ back portions, wherein the tooth portion and the pair of ½ back portions integrally form a generally T-shaped cross-section, wherein each ½ back portion in the pair of ½ back portions includes a peripheral-direction end face, and wherein adjacently disposed stator core elements contact one another along their peripheral-direction end faces.

3. An axial-gap dynamo-electric machine as claimed in claim 1, wherein the tooth portion of each stator core element includes a pair of ½ teeth portions, wherein the back portion and the pair of ½ teeth portions integrally form a generally U-shaped cross-section, wherein each ½ tooth portion in the pair of ½ teeth portions includes a peripheral-direction end face, and wherein adjacently disposed stator core elements contact one another along their peripheral direction end faces.

4. An axial-gap dynamo-electric machine as claimed in any preceding claim, further including,
a position plate, for mounting to the plurality of stator core elements, wherein radial-direction, convex structures are disposed on the back portion of each stator core element, wherein said position plate includes radial-direction, concave structures that engage the radial-direction, convex structures on the back portion of each stator core element, and wherein said position plate is secured to said dynamo-electric machine case.

5. An axial-gap dynamo-electric machine as claimed in any preceding claim, further including,
a donut-shaped stator-securing cover having through-holes formed therein, wherein said through-holes register with corresponding teeth portions of the stator core elements of the stator core, wherein said donut-shaped stator securing cover snappingly engages the rotor side of the stator core elements.

6. An axial-gap dynamo-electric machine as claimed in any preceding claim, wherein each stator core element is formed from a plurality of steel plates laminated together such that the steel plates are generally perpendicular to a radial line originating from an axis of rotation of said axial-gap dynamo-electric machine.

7. An axial-gap dynamo-electric machine as claimed in any preceding claim, wherein the stator further includes,
a position plate for mounting to the plurality of stator core elements, and
means for fastening each stator core element to said position plate.

8. A stator for use in an axial-gap dynamo-electric machine, comprising:
a plurality of stator core elements, wherein each stator core element includes a tooth portion and a back portion, and wherein the stator core elements are disposed adjacent to one another such that the back portions of adjacent stator core elements contact one another.

9. A stator as claimed in claim 8, wherein the tooth portion is integral with the back portion to form a generally T-shaped cross-section, wherein each back portion includes a first and a second peripheral-direction end face, and wherein adjacently disposed stator core elements contact one another along their peripheral-direction end faces.

10. A stator as claimed in claim 8, wherein the tooth portion of each stator core element includes a pair of teeth, wherein the back portion is integral with the pair of teeth to form a generally U-shaped cross-section, wherein each tooth in each pair of teeth includes a peripheral-direction end face, and wherein adjacently disposed stator core elements contact one another along their peripheral direction end faces.

11. A stator as claimed in claim any of claims 8 to 10, further including,
a position plate for mounting to the plurality of stator core elements, wherein each stator core element includes at least one of a depression or a projection that engages a mating structure formed in the position plate.

12. A stator as claimed in claim 11, wherein the at least one depression or projection of each stator core element is elongated along a radial-direction defined by a radial line extending from an axis of rotation associated with said stator.

13. A stator as claimed in claim 11 or claim 12 wherein the plurality of stator core elements are fastened to said position plate such that the steel plate laminations of each sector core element are generally perpendicular to a radial line extending from an axis of rotation associated with the stator.

14. A stator as claimed in any of claims 8 to 13, further including,
a stator-securing element having engagement openings adapted to mate with the tooth portions of each stator core element.
